# EUROPEAN PATENT APPLICATION

(11) **EP 4 269 737 A1**
(43) Date of publication of application: **01.11.2023**
(21) Application number: 22170147.7
(22) Date of filing: 26.04.2022
(51) Int. Cl.: E05F 11/48, E05F 15/689

(54) **WINDOW REGULATOR ASSEMBLY OF A VEHICLE**

(71) Applicant: Hi-Lex Europe GmbH, 97424 Schweinfurt (DE)
(72) Inventor: Matsushita, Masayuki, 97421 Schweinfurt (DE); Vendulet, Joachim, 67700 Niederkirchen (DE)
(74) Representative: Gosdin, Carstensen & Partner Patentanwälte Partnerschaftgesellschaft mbB

(57) **Abstract**

The invention relates to a window regulator assembly (1) of a vehicle, wherein the window regulator assembly (1) comprises a carrier element (2), wherein at least one pulley arrangement (3) for redirecting a cable (4) is mounted at the carrier element (2), wherein the pulley arrangement (2) comprises a pulley (5) which is arranged rotatable on a bearing element (6), which bearing element (6) is mounted on the carrier element (2). To design a generic window regulator assembly in such a way that fewer components are required and a simpler assembly process is possible, the invention proposes that the bearing element (6) is formed by a section of a screw (7), wherein the screw (7) has adjacent to the bearing element (6) a first thread (8) with a first thread diameter (D1) which is designed to be engaged with a threaded bore (9) in the carrier element (2) and wherein the screw (7) has a second thread (10) adjacent to the first thread (8) with a second thread diameter (D2), which is smaller than the first thread diameter (D1).

## Description

The invention relates to a window regulator assembly of a vehicle, wherein the window regulator assembly comprises a carrier element, wherein at least one pulley arrangement for redirecting a cable is mounted at the carrier element, wherein the pulley arrangement comprises a pulley which is arranged rotatable on a bearing element, which bearing element is mounted on the carrier element.

A window regulator assembly of the generic type is known from US 10,550,926 B2. Such an arrangement is used in a vehicle door. Here, several pulley arrangements are arranged on a carrier element, each of the pulley arrangements having a pulley which is rotatably mounted in order to guide and redirect a cable. The pulley is mounted rotatable on a metal bracket, which in turn is attached to the carrier element. The carrier plate is subjected to a forming process and thus given a desired shape.

The disadvantage of this solution is that the manufacturing costs are high due to the relatively high complexity of the components required. The relatively complex design of the metal bracket in particular requires a large number of components. Similarly, the assembly process is complex and therefore expensive.

The invention is therefore based on the object of designing a generic window regulator assembly in such a way that fewer components are required and a simpler assembly process is possible. This is intended to reduce the costs of manufacturing a window regulator assembly.

The solution of this problem by the invention is characterized in that the bearing element is formed by a section of a screw, wherein the screw has - adjacent to the bearing element - a first thread with a first thread diameter which is designed to be engaged with a threaded bore in the carrier element and wherein the screw has a second thread adjacent to the first thread with a second thread diameter, which is smaller than the first thread diameter.

Preferably, the bearing element is designed as a cylindrically formed section of the screw.

The first thread is preferably a self-tapping thread; the first thread is thus directly screwed into the material of the carrier element (without pre-machining). Insofar, it should be mentioned for sake of clarification that the above mentioned threaded bore in the carrier element can originally be a simple bore in which the self-tapping first thread of the screw is screwed (and thereby creates the threaded bore in the carrier element).

Therefore, the carrier element is made preferably of plastic material, especially of polypropylene. Also, reinforcement fibres can be integrated into the material of the carrier element.

The screw has preferably a disc-shaped end section forming an axial stop for the pulley. The disc-shaped end section has preferably a bigger diameter than the outer diameter of the bearing element. Furthermore, the disc-shaped end section has preferably a hexagon socket or a torx socket for the engagement of a tool; the tool can be engaged via the socket during assembly.

According to a preferred embodiment of the invention an intermediate section is arranged between the first thread and the second thread, which intermediate section has a first ring-shaped surface which perpendicular is directed in the direction of the axis of the screw. The intermediate section can have a cylindrical outer surface. Preferably, the first ring-shaped surface flushes with a bottom surface of the carrier element in the mounted state of the assembly.

According to a specifically preferred embodiment, the bearing element has an end section adjacent to the first thread, wherein the end section has a second ring-shaped surface which perpendicular is directed in the direction of the axis of the screw. The carrier element can have a support area for contacting the second ring-shaped surface. The contact between the second ring-shaped surface and the support area is given after assembly to fix the screw relatively to the carrier element in a defined axial position.

The carrier element can be for example a guide rail of the window regulator or can be designed as a module plate.

With the proposed solution, it is possible to make the pulley arrangement much simpler and with fewer components. The required components have a simple design and are therefore inexpensive to manufacture. By screwing the screw, on which the bearing surface for the pulley is also formed, directly into the material of the carrier element, the assembly costs can be significantly reduced.

The drawings show an example of an embodiment of the invention.
- Fig. 1: shows a perspective view of a window regulator assembly,
- Fig. 2: shows a perspective view of a part of the carrier element of the window regulator assembly, before the pulley arrangement is mounted,
- Fig. 3: shows a perspective view of a part of the carrier element of the window regulator assembly, after the pulley arrangement is mounted,
- Fig. 4: shows a perspective view of the screw, being a part of the pulley arrangement, seen from a first view,
- Fig. 5: shows a perspective view of the screw according Figure 4, seen from a second view,
- Fig. 6: shows a perspective view of the screw and the mounted pulley and
- Fig. 7: shows a cross sectional view of the carrier element with the mounted pulley arrangement.

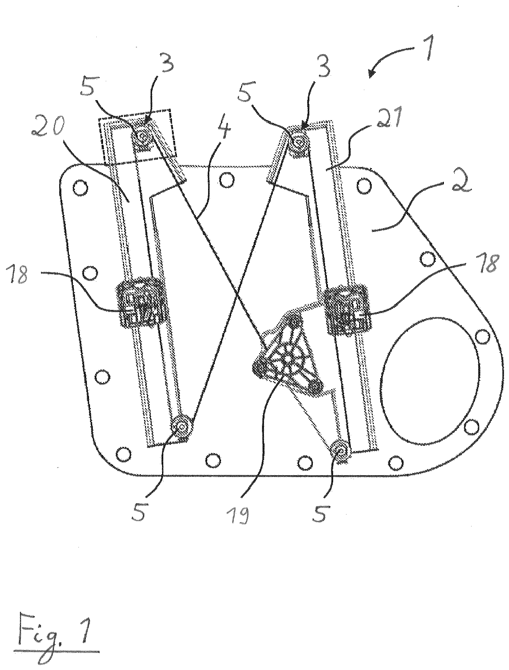

In Figure 1, a window regulator assembly 1 is shown which includes window carriers 18, a cable 4 and a drive unit 19. Each of the window carriers 18 is engaged with guide rails 20, 21 and caused to travel up and down along the guide rails 20, 21. In addition, the window carriers 18 include a window clamp arrangement (not shown) which is engaged with the window. Each window carrier 18 is attached or connected to the cable 4. Such attachments or connection may be made by clamps, fasteners, adhesives, press fitting, snap fittings, or any other means.

As shown in Figure 1, the drive unit 19 may be manually operated via a hand crank mechanism or powered, most commonly done using an electric motor (not shown) attached to a set of gears, such as worm and spur gears. The drive unit 19 interacts with the cable 4 to provide the cable tension necessary to cause the window carriers 18 and the window (not shown) to move between its open and closed positions. Furthermore, the drive unit 19 may be attached to the integrated carrier element 2.

In Figure 1, the unitarily formed guide rails 20, 21 each includes a pulley arrangement 3 with a pulley 5 coupled to the upper end of each of the guide rails 20, 21. Furthermore, pulley arrangements 3 with pulley 5 are also coupled to the lower end of each of the guide rails 20, 21.

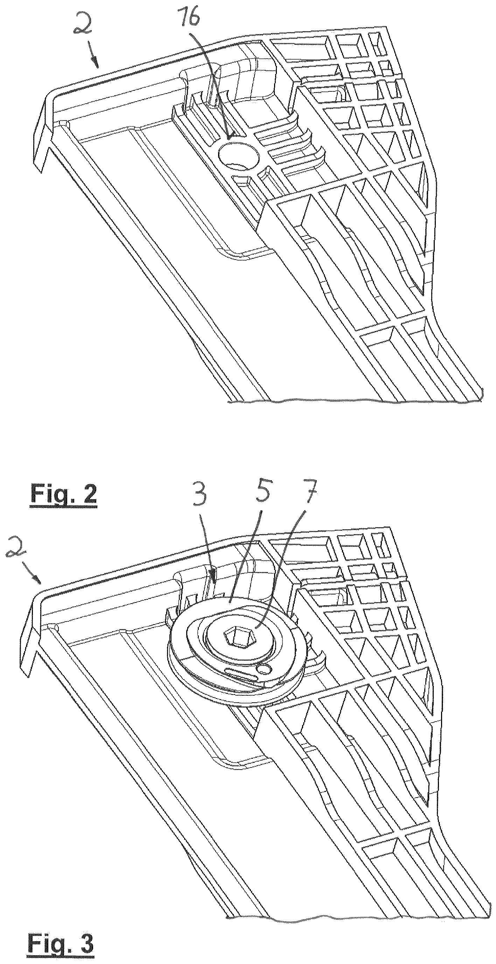

Figure 2 shows a part of the carrier element 2 which has a recess (opening) enclosed by a support area 16. The recess is used for the screw 7 described below to pass through.

Figure 3 shows the section of the carrier element 2 shown in Figure 2 again, with the pulley arrangement 3 now mounted. The pulley 5 can be seen, which is rotatably mounted and axially fixed by means of the screw 7.

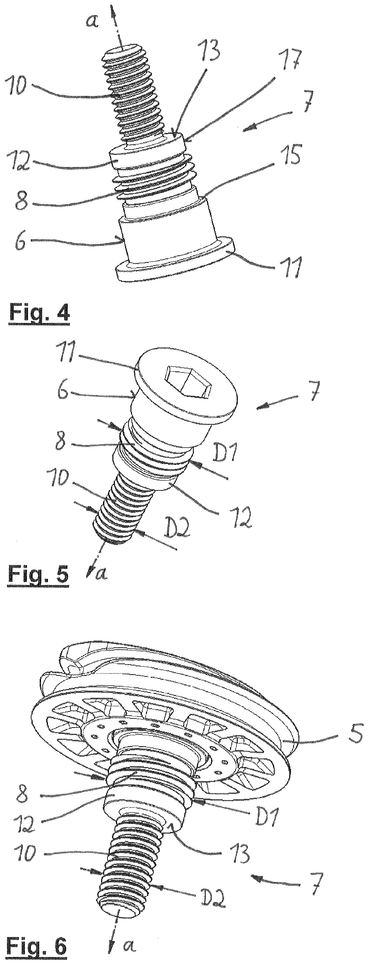

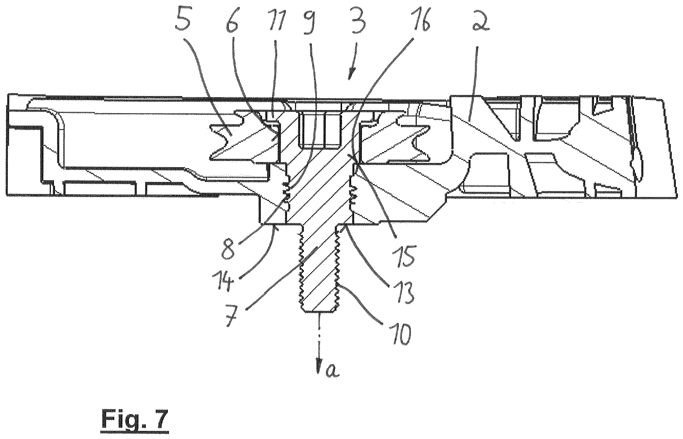

The screw 7 itself and also the other components of the pulley arrangement 3 are shown in Figures 4 to 7 below, with Figure 7 showing a cross sectional view of the fully assembled arrangement.

The reference signs are used in the same way in all figures, but are partly omitted in individual figures for reasons of clarity.

As can be seen from the above figures, the screw 7 has an axis a. In its upper section, the screw 7 has a bearing element 6 which is designed as a cylindrical surface and which serves to rotatably support the pulley 5. A disk-shaped end area 11 of the screw 7 with enlarged diameter serves to axially fix the pulley 5 and forms an axial stop for the pulley 5.

The screw 7 further has a first thread 8 which connects to the bearing element 6; this thread 8 is self-tapping and has a diameter D1. As can be seen from the synopsis with figure 7, the screw 7 with the first thread 8 is screwed into the material of the carrier element 2, so that a threaded hole 9 results here.

The first thread 8 is followed by a second thread 10, which has a diameter D2 that is smaller than the diameter D1 (for example M6). As can be seen in Figure 7, the screw 7 extends downwardly from the carrier element 2 with its second thread 10, and therefore the second thread 10 is available to secure the carrier element 2 to another component. More specifically, the second thread 10 is used to fix the screw 7 and thus the pulley arrangement 3 including the whole carrier element 2 at or in a vehicle door by means of a screw nut (not shown).

Between the first thread 8 and the second thread 10 is a short intermediate section 12 arranged, which has a cylindrical outer surface 17. At the end facing away from the first thread 8, the intermediate section 12 has a first ring-shaped (annular) surface 13. After assembly, the first ring-shaped surface flushes with a bottom surface 14 of the carrier element 2 (see Figure 7).

As can be seen from Figures 4 and 7, a second annular surface 15 is formed between the bearing element 6 and the first thread 8, which is intended to come into contact with the support area 16 of the carrier element 2 (see Figure 2) during assembly. This gives the screw 7 a defined contact surface during assembly.

Both annular surfaces 13 and 15 have preferably a perpendicular pointing in the direction of the axis a.

If the screw 7 is screwed into the carrier element 2 with the first thread 8 during assembly, this results in a defined axial contact of the screw 7 with the carrier element 2 through the second annular surface 15. This not only fixes and secures the pulley 5 axially, but also allows it to rotate freely as a result of the bearing element 6. The pre-assembled carrier element 2 with all the pulley arrangements 3 provided can then be fixed to the vehicle door by means of the second threads 10 using appropriate nuts.

### List of References:

- 1: Window regulator assembly
- 2: Carrier element
- 3: Pulley arrangement
- 4: Cable
- 5: Pulley
- 6: Bearing element
- 7: Screw
- 8: First thread
- 9: Threaded bore (created by the self-tapping first thread 8)
- 10: Second thread
- 11: Disc-shaped end section of the screw
- 12: Intermediate section
- 13: First ring-shaped surface of the intermediate section
- 14: Bottom surface of the carrier element
- 15: Second ring-shaped surface
- 16: Support area of the carrier element
- 17: Cylindrical outer surface of the intermediate section
- 18: Window carrier
- 19: Drive unit
- 20: Guide rail
- 21: Guide rail

- D1: First thread diameter
- D2: Second thread diameter
- a: Axis of the screw

## Claims

1. Window regulator assembly (1) of a vehicle, wherein the window regulator assembly (1) comprises a carrier element (2), wherein at least one pulley arrangement (3) for redirecting a cable (4) is mounted at the carrier element (2), wherein the pulley arrangement (2) comprises a pulley (5) which is arranged rotatable on a bearing element (6), which bearing element (6) is mounted on the carrier element (2),
**characterized in that**
the bearing element (6) is formed by a section of a screw (7), wherein the screw (7) has adjacent to the bearing element (6) a first thread (8) with a first thread diameter (D1) which is designed to be engaged with a threaded bore (9) in the carrier element (2) and wherein the screw (7) has a second thread (10) adjacent to the first thread (8) with a second thread diameter (D2), which is smaller than the first thread diameter (D1).

2. Window regulator assembly according to claim 1, **characterized in that** the bearing element (6) is designed as a cylindrically formed section of the screw (7).

3. Window regulator assembly according to claim 1 or 2, **characterized in that** the first thread (8) is a self-tapping thread.

4. Window regulator assembly according to one of claims 1 to 3, **characterized in that** the carrier element (2) is made of plastic material, especially of polypropylene.

5. Window regulator assembly according to one of claims 1 to 4, **characterized in that** the screw (7) has a disc-shaped end section (11) forming an axial stop for the pulley (5).

6. Window regulator assembly according to claim 5, **characterized in that** the disc-shaped end section (11) has a bigger diameter than the outer diameter of the bearing element (6).

7. Window regulator assembly according to claim 5 or 6, **characterized in that** the disc-shaped end section (11) has a hexagon socket or a torx socket for the engagement of a tool.

8. Window regulator assembly according to one of claims 1 to 7, **characterized in that** an intermediate section (12) is arranged between the first thread (8) and the second thread (10), which intermediate section (12) has a first ring-shaped surface (13) which perpendicular is directed in the direction of the axis (a) of the screw (7).

9. Window regulator assembly according to claim 8, **characterized in that** the first ring-shaped surface (13) flushes with a bottom surface (14) of the carrier element (2) in the mounted state of the assembly.

10. Window regulator assembly according to one of claims 1 to 9, **characterized in that** the bearing element (6) has an end section adjacent to the first thread (8), wherein the end section has a second ring-shaped surface (15) which perpendicular is directed in the direction of the axis (a) of the screw (7).

11. Window regulator assembly according to claim 10, **characterized in that** the carrier element (2) has a support area (16) for contacting the second ring-shaped surface (15).
